# EUROPEAN PATENT APPLICATION

(11) **EP 3 483 338 A1**
(43) Date of publication of application: **15.05.2019**
(21) Application number: 18020587.4
(22) Date of filing: 09.11.2018
(51) Int. Cl.: E01C 3/00, E01C 3/06, E01C 9/00, E01C 11/22, E01C 13/02, E02D 17/20, E04D 13/04, E02B 11/00, E03F 1/00

(54) **DESIGN ADJUSTMENT OF A DRAINAGE ELEMENT**

(30) Priority: 10.11.2017 CZ 2017725
(71) Applicant: Cegan Holding, a.s., 66451 Slapanice (CZ)
(72) Inventor: Cegan, Slavoj, CZ-66451 Slapanice (CZ)
(74) Representative: Kendereski, Dusan

(57) **Abstract**

Design adjustment of a drainage element consisting of a support element (1), inner cells (2), outer cells (2') and a permeable foil (7), wherein the inner walls (4) of inner cells (2) and outer walls (6) of outer cells (2') are provided with at least four notches (3) on the side of the top surface (5) of the drainage element support element.

## Description

### Field of the Invention

The invention relates to a construction of a drainage element comprising a support element constituted by inner cells mutually surrounding one another and outer cells, peripheral walls of which define outer walls of the drainage element. This design adjustment allows for efficient transportation of the drainage element.

### Background of the Invention

The drainage element usually consists of an assembly of mutually adjacent cells separated by walls provided with openings that provide passage through these cells. When transporting drainage elements, they are stacked on top of one another and then transported to the installation site. The problem of packaging the elements lies in the fact that they are stacked on top of one another, thus occupying a large volume. This results in that a transport space in which the drainage elements are transported is not effectively utilized.

The design of the drainage element is known from PV 2015-649, which discloses a drainage element comprising a support element formed by inner cells mutually surrounding one another and outer cells. Inner walls thereof define the outer walls of the drainage element in which the lower surface of the inner walls of the inner cells and the outer walls of the outer cells are larger than the upper surface of the inner walls of the inner cells and the outer walls of the outer cells. The bottom surface of the inner cells and outer cells of the support element is provided with grooves. The disadvantage is, that during transportation, the drainage elements thus constructed cannot be moved between one another.

The aim of the invention is to design a drainage element allowing for efficient transport thereof. And thus allowing for efficient use of the transport space occupied by drainage elements occupy during transportation. This design allows for mutual stacking of drainage elements into one another in order to ensure efficient packaging, thus enabling transportation of double the number of drainage elements.

### Summary of the invention

The above-mentioned drawbacks are eliminated by designing adjustment of a drainage element consisting of a support element, inner cells, outer cells and a permeable foil, the essence of which is characterized in that the inner walls of the inner cells and the outer walls of the outer cells are provided with at least four notches from the side of the top surface of the support element of the drainage element.

The principle of the design adjustment of the drainage element is that the notches in the inner and outer walls of the cells allow the insertion of two mirror-oriented drainage elements into one another. The preferred embodiment of the drainage element design adjustment has notches in both inner and outer walls of cells with a depth greater than or equal to half the height of these walls, which allows to reduce the wall height of the transported drainage elements by half and to double the number of transported drainage elements.

To ensure the insertion of two mirror-oriented design adjusted drainage elements into one another, the support elements have notches in both inner and outer walls. The support elements may have a shape, which corresponds to a triangle, rectangle, trapezoid, or optionally to other set of curves or lines allowing the insertion of two mirror-oriented support elements into one another. The notches are preferably formed in the middle of the inner and outer wall of the cells from the side of the top surface, the notches having a width corresponding to or greater than the thickness of the cell wall.

The notches in inner and outer cell walls can be created in support elements the cells of which have a triangle, tetragon, pentagon, hexagon, heptagon, octagonal, or circular shape in plan.

A preferred embodiment of the drainage element design adjustment has a 1:1 or 1:2 ratio of cell wall height to width, wherein the support element is made of a durable plastic such as PE, PP, PVC or steel or sheet metal, and the permeable film is made of PE or PP or PES geotextile.

The drainage element thus design adjusted enables to reduce the height of the walls of the transported drainage elements by half, thus to double the number of transported drainage elements and maintain the load-bearing capacity and required functionality of the drainage element.

A preferred embodiment is a support element of dimensions 1176 mm x 764 mm x 32 m. This is formed by mutually interconnected inner and outer cells having a hexagonal shape in plan view. The support element preferably comprises 530 mutually interconnected cells, wherein the size of one cell is 42 mm. The support element is provided with a water-permeable foil, for example a polypropylene nonwoven geotextile, having a surface weight of 45 g/m² - 68 g/m². This polymeric material exhibits high strength and flexibility. The weight of the drainage element without the aggregate load is from 1.3 kg to 1.5 kg.

The load-bearing capacity of the design adjusted drainage element, which is made of unrecycled polypropylene, is 120 t/m² without the load, and 95 t/m² when recycled polypropylene is used The load-bearing capacity of the design adjusted drainage element after load is up to 300 /m² for non-recycled polypropylene and up to 250 /m² for recycled polypropylene, the thermal limitation of the design adjusted drainage element is from -20 ° C to + 70 ° C.

### Description of Figures in Drawings

The invention will be further illustrated by drawings, where Fig. 1 shows a detail of the support element with hexagonal cells in plan view; Fig. 2 shows a detail of the support element with circular cells in plan view; Fig. 3 shows a side view of a hexagonal cell, the walls of which are provided with triangular notches; Fig. 4a shows a side view of a hexagonal cell the walls of which are provided with rectangular notches with a depth corresponding to half the height h of the cell wall; Fig. 4b shows a side view of a hexagonal cell the walls of which are provided with rectangular notches with a depth corresponding to one third of the height h of the cell wall; Fig. 4c shows a side view of a hexagonal cell the walls of which are provided with rectangular notches with a depth corresponding to three quarters of the height h of the cell wall; Fig. 4d shows an upper view of hexagonal cells the walls of which are provided with rectangular notches with a width **w** corresponding to the width of the cell wall; Fig. 5 shows a side view of a hexagonal cell the walls of which are provided with triangular notches with curved sides; Fig. 6 shows a top plan view of the detail of two mirror-oriented support elements with hexagonal cells with slots inserted into one another; Fig. 7 shows a front view of the two mirror-oriented support elements with hexagonal cells and triangular notches; Fig. 8 shows an axonomic view of a detail of two mirror-oriented support elements inserted into one another; Fig with hexagonal cells and triangular notches; Fig. 9 shows a side view of the detail of the eight mirror-oriented support elements inserted with hexagonal cells and triangular notches; Fig. 10 shows an axonomic view of the detail of eight mirror-oriented support elements inserted ; Fig with hexagonal cells and triangular notches; Fig. 11 shows a top plan view of the detail of two mirror-oriented support elements with circular cells and rectangular notches inserted into one another; Fig. 12 shows an axonomic view of the detail of two mirror-oriented support elements with circle cells and rectangular notches inserted into one another; Fig. 13 shows a top plan view of the detail of two mirror-oriented support elements with square cells and rectangular notches inserted into one another; Fig. 14 shows an axonomic view of the detail of two mirror-oriented support elements with quadrangular cells and rectangular notches inserted into one another; Fig. 15 shows an axonomic view of a design adjusted drainage element with hexagonal cells in a support element; and Fig. 16 shows an axonomic view of two mirror-oriented structural design adjusted drainage elements with hexagonal cells in the support element inserted into one another.

### Description of an Exemplary Embodiment

The invention will be explained in the following description with reference to the accompanying Figures. In the Figures, the invention is illustrated by exemplary embodiments of various embodiments of the design adjusted drainage element.

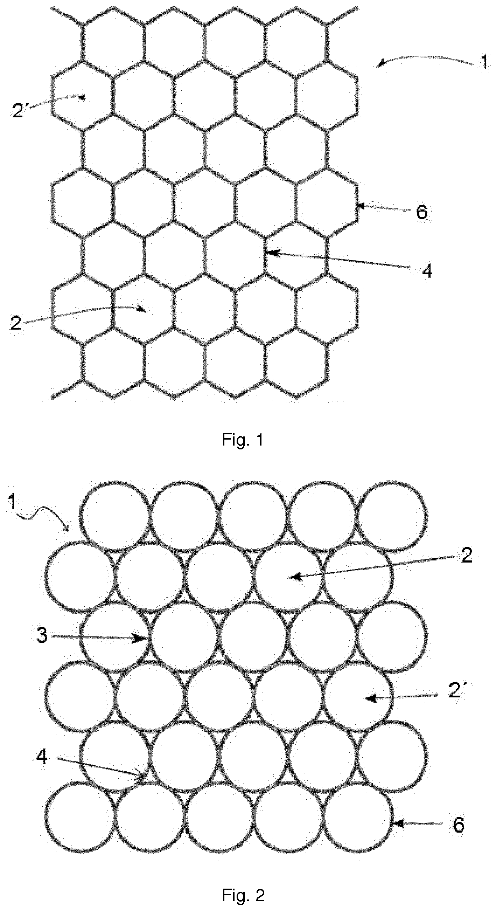

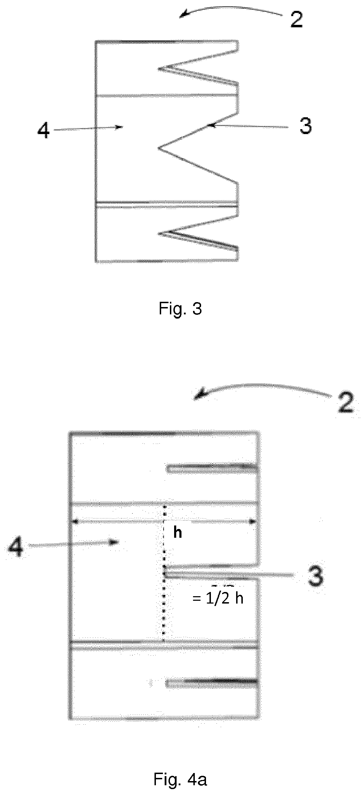

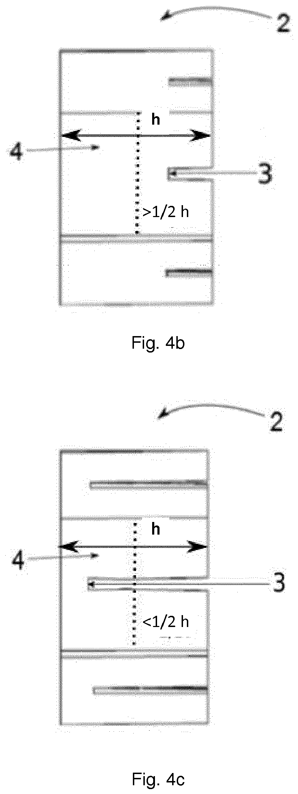

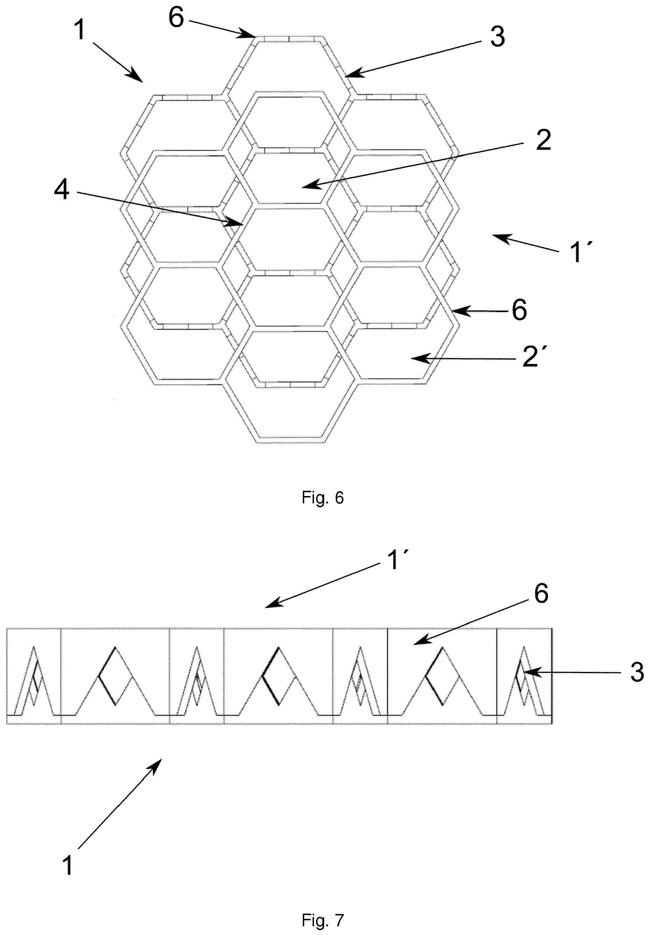

An example of a design adjusted drained drainage element with a support element 1 with hexagonal both outer and inner cells 2, 2' is shown in the plan view in Fig. 1. The support element 1 in this embodiment is formed by both outer and inner cells 2, 2' of hexagonal shape with notches 3 formed in their inner and outer walls 4, 6. The outer and inner cells 2', 2 are mutually interconnected by their inner 4 walls. In the case where the outer and inner cells 2', 2 have a hexagonal shape in cross section, they are arranged in honeycomb-like shape. The side view of the hexagonal inner cell 2 is shown in Fig. 3. As can be seen from the figure, this cell 2 is formed by inner walls 4 provided with notches 3. The inner walls 4 arranged in the hexagon define both the inner space of the cell 2 and the inlet opening thereof. The condition of the solution is that the support element 1 and the mirror-oriented support element 1' can be inserted into one another, as shown in Fig. 7. This is made possible by means of notches 3 which are formed both in the inner walls 4 and the outer walls 6 of the support element 1 and by means of the mirror-oriented support element 1'. The notches 3 have a depth greater than or equal to half the height **h** of the inner wall 4 and the outer wall 6 as shown in Fig. 4a, Fig. 4b, Fig. 4c.

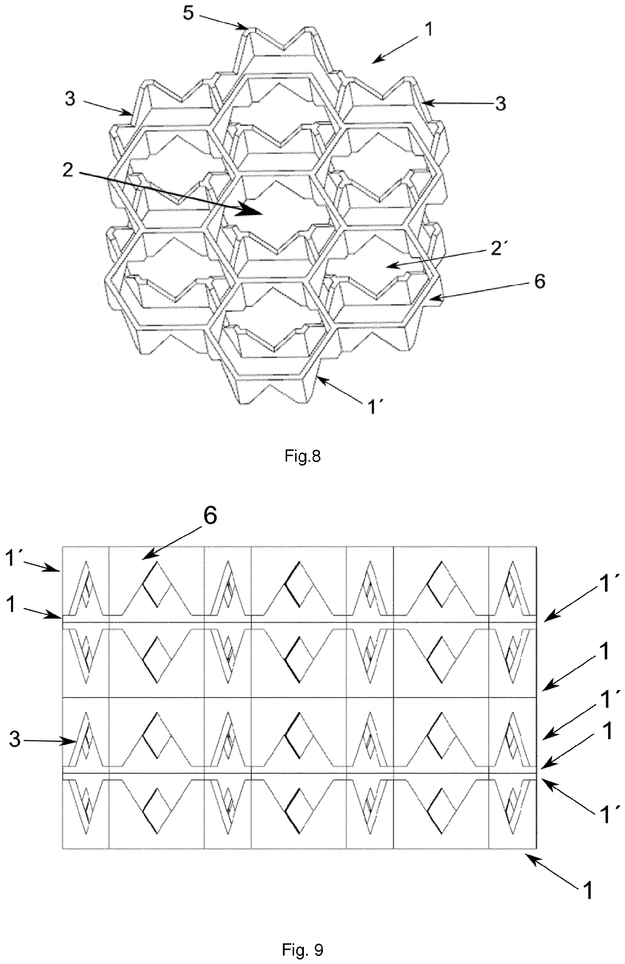

Fig. 6 shows a top plan view of mirror-oriented support element 1' and a support element 1 of a design adjusted drainage element inserted into one another. The support element 1 and the mirror-oriented support element 1' of the drainage element transport structure are formed by hexagonal inner and outer cells 2, 2' which are provided with triangular notches 3. The side view of the thus embodied inserted support element 1 and the mirror-oriented support element 1' of the design adjusted drainage element is shown in Fig. 7, from which housing of two such design adjusted drainage elements facing one another is evident. Fig. 8 shows an axonometric view of the detail of the inserted support element 1 and the mirror-oriented support element 1'. From the figures above it can be seen that the thus packaged drainage elements provide an efficient space saving when transporting drainage elements.

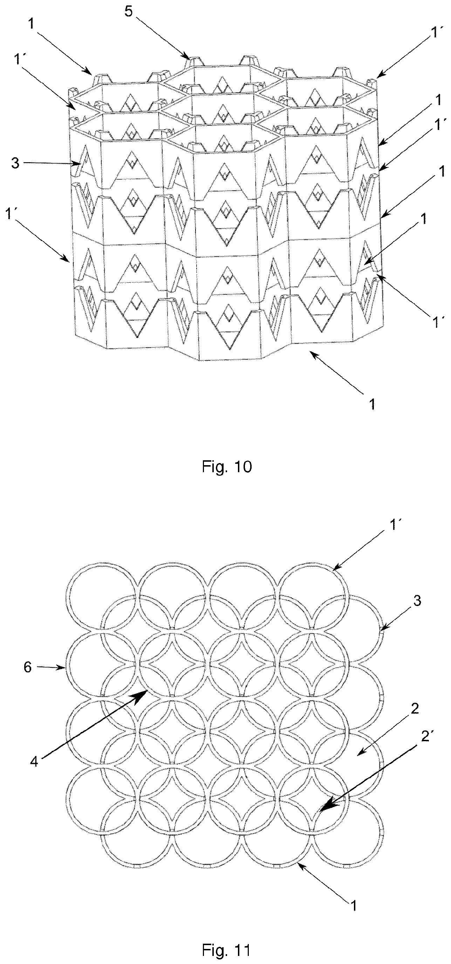

The design of the mirror-oriented support element 1' and the support element 1 of the drainage elements with notches 3 provided on the upper surface 5 of the inner and outer cells 2, 2' enables to effectively stack the support element 1 and the mirror-oriented support element 1' of the drainage elements and it is thus possible to increase the number of transported drainage elements, as shown in Fig. 9 and Fig. 10.

The notches 3 formed in the inner and outer walls 4, 6 of the inner and outer cells 2,2' serve to insert the support element 1 and the mirror-oriented support element 1' into one another. The notches 3 may be in the shape of a triangle, rectangle, or triangle with curved sides as shown in Fig. 3, Fig. 4a, Fig. 4b, Fig. 4c, Fig. 4d and Fig. 5. The notches 3 may also have the shape of a trapezoid or any geometric configuration allowing for insertion of the mirror-oriented support element 1' and the support element 1 into one another.

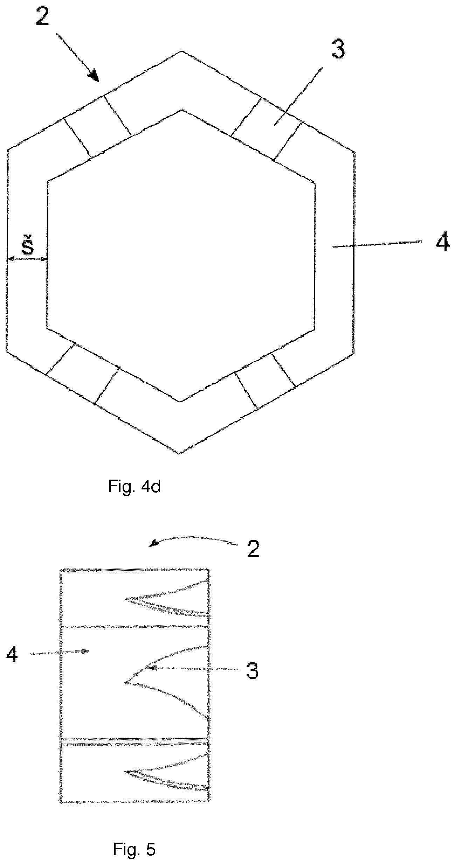

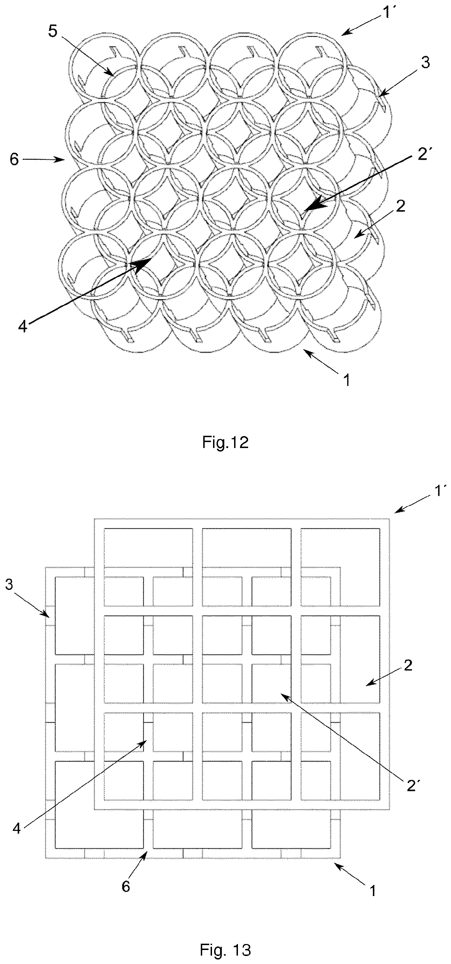

An example of a design adjusted drainage element with a support element 1 of the drainage element with circular outer and inner cells 2, 2' is shown in the plan view in Fig. 2. The support element 1 in this embodiment forms both the outer and inner cells 2, 2' of circular shape with notches 3 formed on their inner and outer walls 4,6, wherein the outer and inner cells 2', 2 are mutually connected by means of inner 4 walls thereof. As can be seen in Fig. 11 and Fig. 12, a cell 2 is formed by inner walls 4 provided with notches 3 of rectangular shape. The inner walls 4 of the cell 2 define both the interior space and inlet opening thereof. Notches 3 formed in the outer walls 6 and the inner walls 4 allow insertion of the support element 1 and the mirror-oriented support element 1' as shown in Fig. 12. The notches 3 have a depth equal to half the height of the inner wall 4 and outer wall 6 and have a width **w** identical to the width of the inner wall 4 or outer wall 6 as shown in Fig. 4d.

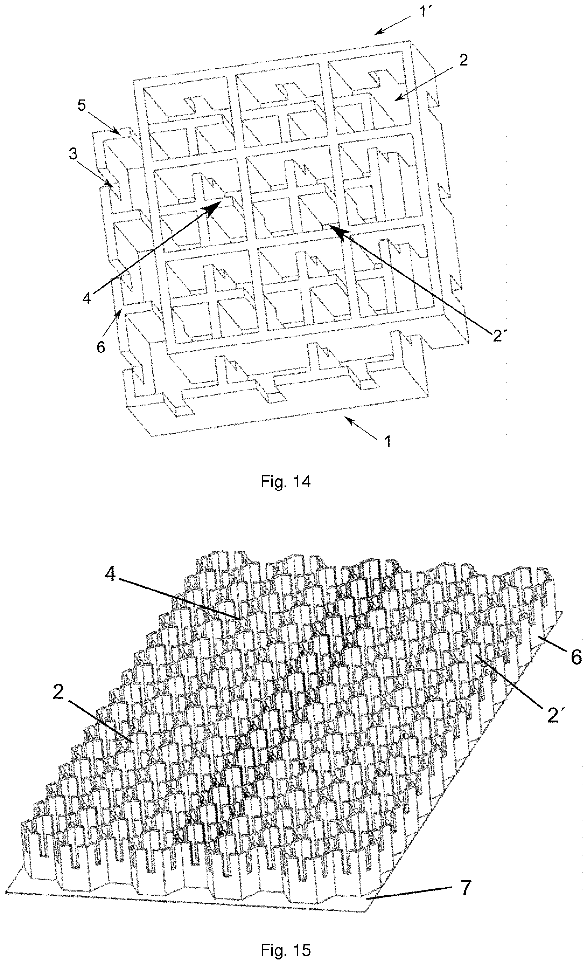

A further example of a design adjusted drainage element with a support element 1 with quadrangular outer and inner cells 2, 2' is shown in the top plan view in Fig. 13. The support element 1 in this embodiment is formed by both outer and inner cells 2, 2' of quadrangular shape with notches 3, formed on both inner and outer walls 4,6 thereof, wherein the outer and inner cells 2', 2 are mutually connected by inner 4 walls thereof. As can be seen from Fig. 13 and Fig. 14, cells 2 are formed by inner walls 4 and outer walls 6 provided with notches 3 of rectangular shape. The notches 3 allow insertion of the support element 1 and the mirror-oriented support element 1' into one another. The notches 3 have a depth equal to half the height **h** in the inner wall 4 and the outer wall 6 and have a width greater than the width **w** of the inner wall 4 or the outer wall 6.

Fig. 15 shows an exemplary embodiment of a design adjusted drainage element consisting of a support element 1 and a permeable foil 7. The support element 1 in this embodiment includes hexagonal inner and outer cells 2,2' with notches 3 formed in the inner and outer walls 4, 6 of these cells from the side of the top surface 5. The inner cells 2 are mutually surrounded by adjacent internal cells 2 and on the edge of the support element 1 by the outer cells 2'. All the inner cells 2 and the outer cells 2' are mutually connected by inner walls 4 thereof. The permeable foil 7 is attached to the support element 1 by the bottom surface. It will be appreciated that the notches 3 may have the shape of a triangle, rectangle, trapezoid, or other set of curves and/or segments allowing for insertion of two support elements of thus oriented design adjusted drainage elements into one another.

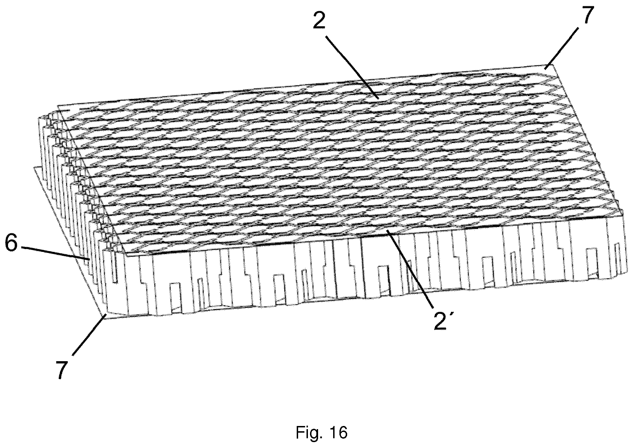

Fig. 16 illustrates an axonomic view of two mirror-oriented design adjusted drainage elements formed by a support element 1 and a mirror-oriented support element 1' with hexagonal inner cells 2 and outer cells 2' in the support element which are inserted into one another.

A preferred embodiment of the design adjustment of the drainage element is a support element 1 of dimensions 1176 mm x 764 mm x 32 m. It consists of mutually interconnected inner cells 2 and outer cells 2', which have a hexagonal shape in the top plan view. The support element 1 preferably consists of 530 mutually interconnected inner and outer cells 2, 2', wherein the size of both inner and outer cells 2, 2' is 42 mm. The support element 1 is provided with a water-permeable foil 7, for example a polypropylene nonwoven geotextile having a surface weight of 45 g/m² - 68 g/m². This polymeric material exhibits high strength and flexibility. The weight of the drainage element is from 1.3 kg to 1.5 kg.

Load capacity of the design adjusted drainage element consisting of unrecycled polypropylene is 120 t/m², and with recycled polypropylene the load capacity is 95 t/m², the thermal limitation of the design adjusted drainage element is from -20 ° C to + 70 ° C. The support element 1 is made of a durable plastic such as PE, PP, PVC, PP/PE copolymers or steel or sheet and the permeable foil 7 is made of PE or PP or PES geotextile.

### Industrial Applicability

The design adjustment of the drainage element is used where it is necessary to maximize the number of drainage elements in the transport space. A drainage element can be located on a road or construction such as a roof of a building, terraces, etc., and is used to drain water, such as rain, from the surface to the surrounding area.

### List of Reference Numbers

1 - support element
1' - mirror-oriented support element
2 - inner cell
2' - outer cell
3 - notch
4 - inner cell wall
5 - top surface of the support element
6 - outer cell wall
7 - permeable foil
**h** - cell wall height
**w** - cell wall width

## Claims

1. Design adjustment of a drainage element consisting of a support element (1), inner cells (2), outer cells (2') and a permeable foil (7), **characterized in that** the inner walls (4) of inner cells (2) and outer walls (6) of outer cells (2') thereof are provided with at least four notches (3) on the side of the top surface (5) of the drainage element support element.

2. Design adjustment of a drainage element according to claim 1, **characterized in that** the notches (3) have a depth greater than or equal to half the height **h** of the inner wall (4) and outer wall (6).

3. Design adjustment of a drainage element according to claim 1, **characterized in that** the notches (3) have a depth less than half the height **h** of the inner wall (4) and outer wall (6).

4. Design adjustment of a drainage element according to claim 1, **characterized in that** the notches (3) have a width equal to or greater than the width **w** of the inner wall (4) of inner cells (2) and the outer walls (6) of outer cells (2').

5. Design adjustment of a drainage element according to claim 1, **characterized in that** the notches (3) are arranged in the middle of the walls of the inner cells (2) and outer cells (2').
